Europäisches Patentamt

European Patent Office

Office européen des brevets

(19)

(11) Publication number: **0 157 952**
**A1**

(12) **EUROPEAN PATENT APPLICATION**

(21) Application number: **84200500.1**

(22) Date of filing: **10.04.84**

(51) Int. Cl.⁴: **F 02 M 31/12**
**H 05 B 3/14**

(43) Date of publication of application:
**16.10.85 Bulletin 85/42**

(84) Designated Contracting States:
**AT BE CH DE FR GB IT LI LU NL SE**

(71) Applicant: **Texas Instruments Holland B.V.**
**Kolthofsingel 8 Postbox 43**
**NL-7600 AA Almelo(NL)**

(72) Inventor: **van der Ploeg, Arie**
**Larixlaan 12**
**NL-7642 VA Wierden(NL)**

(74) Representative: **Kooy, Leendert Willem et al,**
**OCTROOIBUREAU VRIESENDORP & GAADE P.O. Box 266**
**NL-2501 AW The Hague(NL)**

(54) **Fuelmixture-preheater.**

(57) The invention relates to a device (1) to pre-heat a fuel mixture in an intake manifold (12) of a combustion engine, said device consisting of a cylindrical body (3) having a side wall (5) and a bottom (4), provided in the wall of the intake manifold, said body being arranged on an electro- and heat insulating contact bearer (2) and which is secured on the intake manifold in an electro- and heat conducting way by means of a securing structure (10) the bottom of said body being provided with PTC pills (6) which are connected to a current conductor (9) and which are secured on the bottom in an electro- and heat conducting way. The bottom has such a thickness and shape that during pre-heating the fuel mixture a homogeneous heat conduction is created, the side wall (5) having securing means (10) to secure the pre-heater, and wherein it has such a thickness that together with the securing means it provides the required heat resistance upon heat transfer from and to the intake manifold.

FIG. 2

EP 0 157 952 A1

A DEVICE TO PRE-HEAT A FUEL MIXTURE

The invention relates to a device to pre-heat a fuel mixture in an intake manifold of a combustion engine or the like, said device consisting of a cylindrical body having a side wall and a bottom which is provided in a cavity of the wall of the intake manifold, said body being arranged on an electro- and heat insulating contact bearer, and which is secured on the intake manifold in an electro- and heat conducting manner by means of a securing structure, wherein the bottom side of the body, facing the contact barrier, contains PTC pills which are electrically connected to a current conductor by means of a resilient contact, and which are secured on said bottom in an electrical and heat conducting way.

Such a device is generally known.

The drawback of these devices is that the evaporation, distribution and mixing of the fuel mixture are not optimal as the heat, generated by the pre-heater, is not transferred homogeneously and quickly to the fuel mixture. Moreover it is not possible to add the maximal quantity of the developed heat to the fuel mixture, which is due to the configuration and sizes of the bottom of the pre-heater and to the embodiment of the securing means with which the pre-heater is secured in the intake manifold.

The invention tends to abolish these drawbacks and for that purpose it is characterized in that the bottom has such a thickness and shape that during pre-heating the fuel mixture it effects a homogeneous heat conduction, that said side wall is provided with securing means forming said securing structure of the pre-heater, said side wall having such a thickness that together with said securing means it provides the required heat resistance upon the transfer of heat from and to the intake manifold.

By using said features the maximal quantity of heat is transferred quickly to the heat mexture and the necessary heat is concentrated in the part (the thick bottom) of the pre-heater that contacts the fuel mixture. The configuration of that part may be selected such that the required heat transfer and flow resistance at the fuel mixture side are effected. The wall thickness and the mass of the remaining part of the pre-heating body are as slight as possible and direct contact of metal to metal takes place only at the securing means, having small sizes. Thereby, compared to the known pre-heaters of comparable sizes, in the event of the same or even less energy consumption, the efficiency of the mixture heating increase. By placing washers between each of the securing means and the intake manifold the heat transfer from and to the intake manifold can be controlled up to a certain extent. Because of this on the one hand an optimal heat transfer to the mixture is obtained when switching-on the fuel mixture heating, on the other hand, when the fuel mixture heating is switched-off, in the event of a warm intake manifold the switched-off fuel heater is held sufficiently at the ambient temperature (intake manifold). Another advantage is that because the main mass of the pre-heater is in its bottom, the possibility is created to use a smaller number and smaller PTC pills.

The pre-heater of the invention can be used also in other fields of techniques.

The invention will be elucidated on the basis of the drawing now.

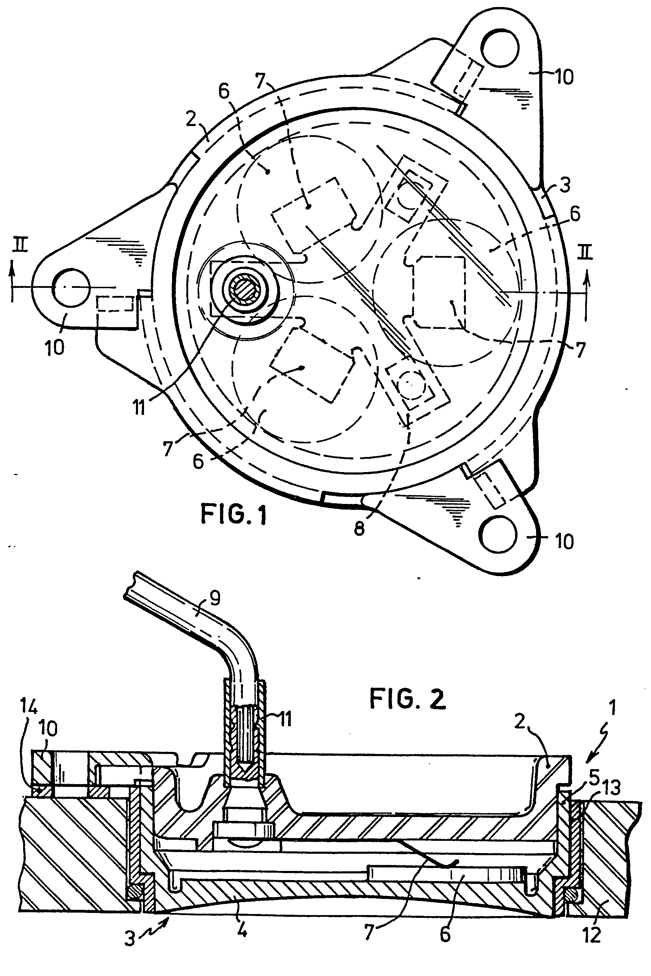

Fig. 1 shows schematically a plan view of a pre-heater according to the invention, in which the intake manifold is left out.

Fig. 2 shows in cross-section, viewed according to arrows II-II in fig. 1, the pre-heater with a part of the intake manifold.

Figures 3 and 4 show cross-sections of bottom configurations, adapted to specific uses.

Figures 5 and 6 show a bottom view and a cross-section of fig. 4 respectively.

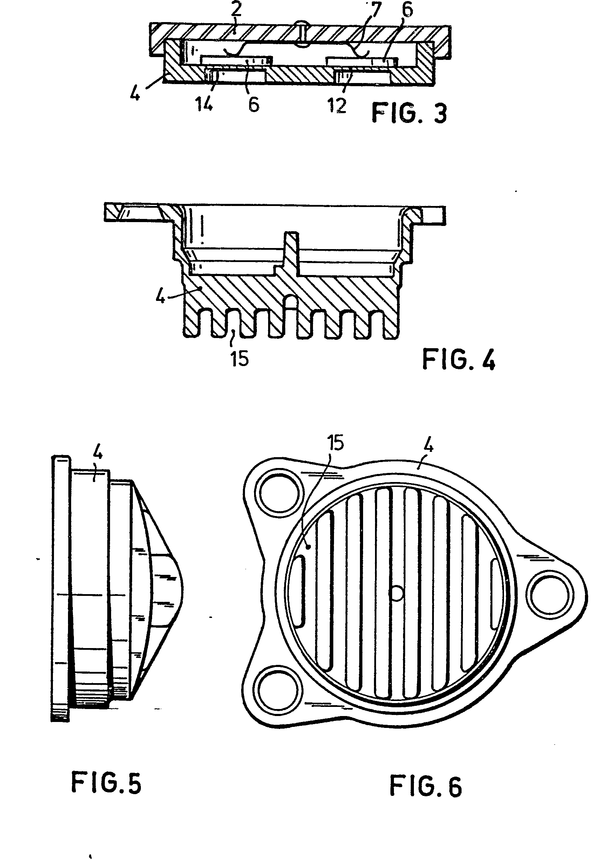

The pre-heater 1 according to the invention consists of two parts: a contact bearer 2, and a cylindrical body 3. The cylindrical body contains a bottom 4 and a thin side wall 5, the mass of the bottom being considerably larger than that of the side wall. The bottom 4 extends in an intake manifold 12 of a combustion engine. On the side of the bottom, facing the contact bearer 2, PTC pills 6 (3 in the illustrated embodiment) are arranged in an electrical and heat conducting way. They are connected to the contact bearer 2 by means of resilient contacts 7. The resilient contacts are formed integrally and are secured on the contact bearer 2 by means of a star-shaped securing member 8, formed integrally with the resilient contacts, which is riveted on the contact bearer at the location of the point of connection 11 of the electric current conductor 9. The cylindrical body 3 is provided with securing means 10 to secure it on the intake manifold by means of screws. In the illustrated embodiment the securing means 10 are formed as eyes. Between the securing means and the intake manifold a packing 13, a washer of stainless steel, an insulating washer of the like or a thermal diode (not illustrated) can be arranged, with the aid of which the heat flow from and to the intake manifold can be controlled. The bottom configuration, illustrated in fig. 3, is provided with thinner sections 14 at the location of the PTC elements 6. Thus a quick evaporation of droplets, particularly at the PTC elements, is obtained.

A bottom 4, shown in fig. 3, 4 and 5, is provided with slots (15) which enable an optimal evaporation of droplets while maintaining a low flow resistance.

The contact bearer and the cylindrical body can be easily mounted and dismounted. On the one hand the mass of the bottom should not be too large in view of the provision of as fast a heat discharge to the fuel mixture as possible, on the other hand the bottom should not loose the heat too quickly with respect to maintaining a certain heat capacity (buffer effect). As has been indicated before, the configuration of this bottom is determined to a high degree by the specific application requirements. The contact bearer may be secured to the bottom by means of a turn/click releasable connection (not shown) (bayonet connection).

The thickness of the side wall of the cylindrical body should be such that an electric mass contact is present, or it should all be formed as an individual mass contact (not illustrated) when said side wall serves as thermally controlled and electric insulation, and that during operation of the engine and in the event of an inactive pre-heater a predetermined quantity of heat of the latter can be added to the side wall.

The present pre-heater needs no thermal shield plate as is required in the known pre-heaters. The use of such a shield plate would be

-5-

attended with heat losses, because it also gives out a part of the heat, developed by the PTC pills.

In the event that an insulating packing is arranged between each one of the securing means and the intake manifold, the flow of electricity and heat takes place via securing means, like screws and the like, arranged in said securing means.

-1-

CLAIMS:

1. A device to pre-heat a fuel mixture in an intake manifold of a combustion engine or the like, said device consisting of a cylindrical body having a side wall and a bottom which is provided in a cavity of the wall of the intake manifold, said body being arranged on an electro- and heat insulating contact bearer, and which is secured on the intake manifold in an electro- and heat conducting manner by means of a securing structure, wherein the bottom side of the body, facing the contact barrier, contains PTC pills which are electrically connected to a current conductor by means of resilient contact, and which are secured on said bottom in an electrical and heat conducting way, characterized in that the bottom (4) has such a thickness and shape that during pre-heating the fuel mixture it effects a homogeneous heat conduction, that said side wall (5) is provided with securing means (10) forming said securing structure of the pre-heater, said side wall having such a thickness that together with said securing means it provides the required heat resistance upon the transfer of heat from and to the intake manifold.

2. A device according to claim 1, characterized in that the securing means (10) are formed as an eye.

3. A device according to claims 1 or 2, characterized in that between each one of the securing means and the intake manifold (12) a packing (13) is arranged.

4. A device according to claim 3, characterized in that between each one of the securing means and the intake manifold a washer of stainless steel (14) is placed.

5. A device according to claim 3, characterized in that between the securing means and the intake manifold a thermal diode is arranged.

6. A device according to one or various ones of the preceding claims, characterized in that the resilient contacts (7) are formed integrally with a star-shaped securing member (8).

7. A device according to claim 1, characterized in that in the event in which said side wall is a thermally controlled and electric insulation, a separate mass contact is provided.

8. A device according to one or various ones of the preceding claims, characterized in that the contact bearer (2) is secured to the bottom by means of a turn/click releasable connection (bayonet connection).

9. A device according to one or various ones of the preceeding claims, characterized in that the bottom (4) has a configuration which enables the split-up of the main flow of the mixture to take place smoothly when considered in a flow-technical way, wherein said bottom may be intersected longitudinally of said flow with droplet-collecting slots (15).

10. A device according to one or various ones of the preceding claims, characterized in that at the location of the PTC elements

-3-

(6) the bottom (4) is provided with thinner sections (14).

HK/HH/LvdM

0157952

FIG.1

FIG. 2

0157952

FIG. 3

FIG. 4

FIG.5

FIG. 6

## DOCUMENTS CONSIDERED TO BE RELEVANT

| Category | Citation of document with indication where appropriate, of relevant passages | Relevant to claim | CLASSIFICATION OF THE APPLICATION (Int Cl.4) |
|---|---|---|---|
| Y | DE-A-3 030 812 (NIPPON SOKEN) * page 6, paragraphs 4-6; page 7, paragraphs 1,3; page 9, paragraph 3 - page 10, paragraph 5; page 13, paragraph 1; page 17, paragraphs 5,6 * | 1 | F 02 M 31/12 H 05 B 3/14 |
| A | | 3 | |
| Y | FR-A-2 506 845 (GUSTAV WAHLER GmbH) * page 1, lines 1-11; page 2, lines 24-37; page 3, lines 1-2, 30-37; page 4, lines 1-22; page 6, lines 5-37; page 7, lines 1-6; page 9, lines 22-25 * | 1 | |
| A | | 6,9,10 | TECHNICAL FIELDS SEARCHED (Int. Cl.4) |
| A | US-A-4 424 787 (SUN CHEMICAL CORP.) * column 4, lines 4-45; figures 5,6 * | 2 | F 02 M H 05 B |
| A | US-A-4 387 291 (TEXAS INSTRUMENTS INC.) * figure 3; column 4, lines 38-68; column 5, lines 1-64 * | 1,9,10 | |

−/−

The present search report has been drawn up for all claims

| Place of search THE HAGUE | Date of completion of the search 07-12-1984 | Examiner JORIS J.C. |
|---|---|---|

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 325 344 (NIPPON SOKEN INC.) <br> * column 2, lines 34-68; column 3, lines 1-2, 19-38; column 4, lines 39-42, 48-68; column 5, lines 1-18 * <br><br> ----- | 1,7 | |

TECHNICAL FIELDS
SEARCHED (Int. Cl.4)

The present search report has been drawn up for all claims

| Place of search | Date of completion of the search | Examiner |
|---|---|---|
| THE HAGUE | 07-12-1984 | JORIS J.C. |